Europäisches Patentamt

European Patent Office

Office européen des brevets

(19)

(11) Publication number: 0 076 664

A1

(12) **EUROPEAN PATENT APPLICATION**

(21) Application number: 82305236.0

(22) Date of filing: 01.10.82

(51) Int. Cl.³: **F 16 K 27/04**
**F 16 K 11/06**

(30) Priority: 02.10.81 GB 8129860

(43) Date of publication of application:
13.04.83 Bulletin 83/15

(84) Designated Contracting States:
AT BE CH DE FR GB IT LI LU NL SE

(71) Applicant: J.H. FENNER & CO. LIMITED
Marfleet
Hull North Humberside, HU9 5RA(GB)

(72) Inventor: Garrard, John Edward
12 Lapwater Close
Leigh on Sea Essex(GB)

(74) Representative: Ranson, Arthur Terence et al,
W.P. Thompson & Co. Coopers Building Church Street
Liverpool L1 3AB(GB)

(54) Improvements in or relating to control of pneumatic motors.

(57) A control valve comprises a valve housing accommodating a valve spool which is axially slidable within a control sleeve to control the connection of a pneumatic supply line to an outlet leading to a pneumatic motor to thereby control the speed of the motor. In order to provide an improved motor response the area of the inlet supply connection (21) uncovered by the spool (35) is arranged such that initially only a small increase in speed is produced for a relatively long travel whilst subsequent movement of the spool produces a greater change in speed. In one embodiment two diamond shaped holes are employed for inlet supply connection port in the sleeve. In another embodiment a plurality of holes are employed and these are of different sizes and those of one size are offset relative to those of another size.

FIG.1

Croydon Printing Company Ltd.

1.

# DESCRIPTION

## "IMPROVEMENTS IN OR RELATING TO CONTROL OF PNEUMATIC MOTORS"

The present invention relates to the control of pneumatic motors and in particular to a main control valve for controlling the speed of a pneumatic motor.

In order to achieve finite analogue control of a pneumatic motor it is necessary to have a main control valve as an integral part of the motor unit. This main valve may be a locally operated lever valve or a remotely controlled valve which is operated via two pressure sensitive signal lines from a remote station.

A known main control valve comprises a valve housing accommodating a valve spool which is axially slidable within a control sleeve. The valve housing has an inlet passage, two motor supply passages and two exhaust passages, emerging through a common exit. The control sleeve is disposed within a bore in the valve housing in a sealed manner and has accurately machined ports corresponding with the inlet passage, motor supply passages and exhaust passages. Interconnection of these passages is determined by the position of the control spool whose movement is controlled either directly by a locally operated lever or remotely, from for example, a pendent valve.

In the known main control valve the inlet passage in the control sleeve comprises a number of circular holes disposed in a common plane in the circumference of the control sleeve. These holes are formed by machining.

The response curve with this arrangement is such that the area of the port uncovered by the spool gives a rapid rise in pressure and hence a rapid rise in speed of the motor upon only a small movement of the spool, such that accurate speed control requires precise movement

of the spool and hence of the operator control. With the known main control valve this finite analogue control has proved difficult to achieve and accordingly the invention sets out to provide a main control valve in which initially a relatively long travel of the spool produces only a small change in speed whilst subsequent movement produces a greater change in speed.

Accordingly there is provided a control valve in which communication between an inlet supply connection and a motor supply line connection for controlling the speed of a pneumatic motor is dependent upon the position of a valve spool in a control sleeve and is such that initially the area of the inlet supply connection uncovered by the spool produces only a small increase in speed for a relatively long travel whilst subsequent movement of the spool produces a greater change in speed.

Preferably the control valve is a four way valve, two motor supply line connections being provided. Communication between the inlet supply connection and one or other of the motor supply lines being dependent upon the position of the valve spool.

In one embodiment of the invention the desired response is achieved by providing holes in the sleeve which are offset, i.e. that are not in the same plane.

In a preferred embodiment the control sleeve is formed as an investment casting and the inlet port is formed as a diamond shape.

The invention will now be described further, by way of example only, with reference to the accompanying drawings, in which:-

Figure 1 is a section of a main control valve in accordance with the invention;

Figure 2 is a section of a control sleeve according to the preferred embodiment of the invention;

3.

Figure 3 illustrates the response curve for a preferred embodiment of the invention using a diamond shaped inlet port;

Figure 4 is a developed view of a control sleeve of one embodiment of the invention, and

Figure 5 illustrates the response curve for the embodiment of Fig. 4 utilizing offset holes.

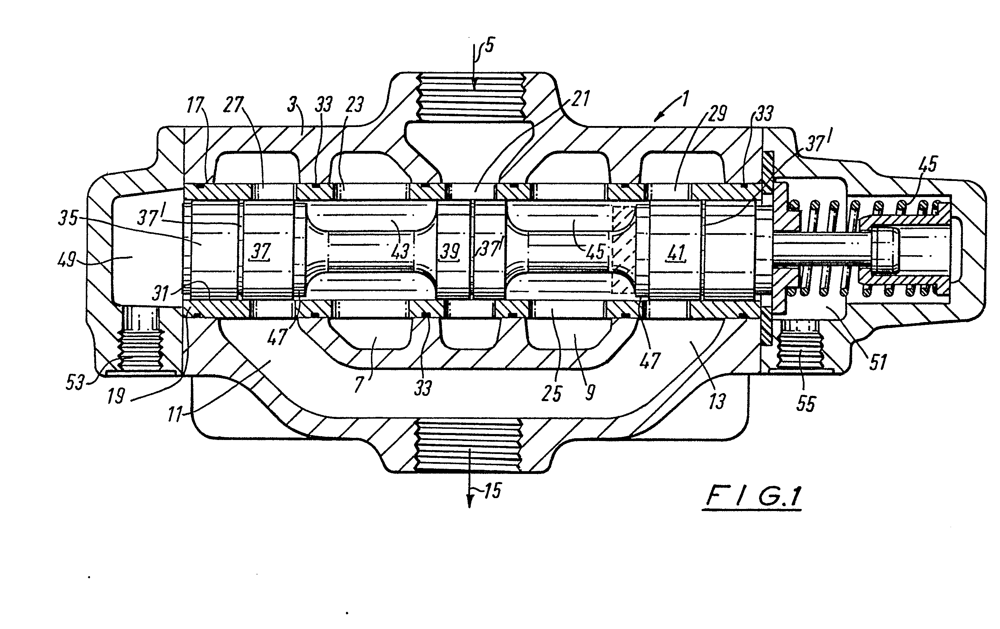

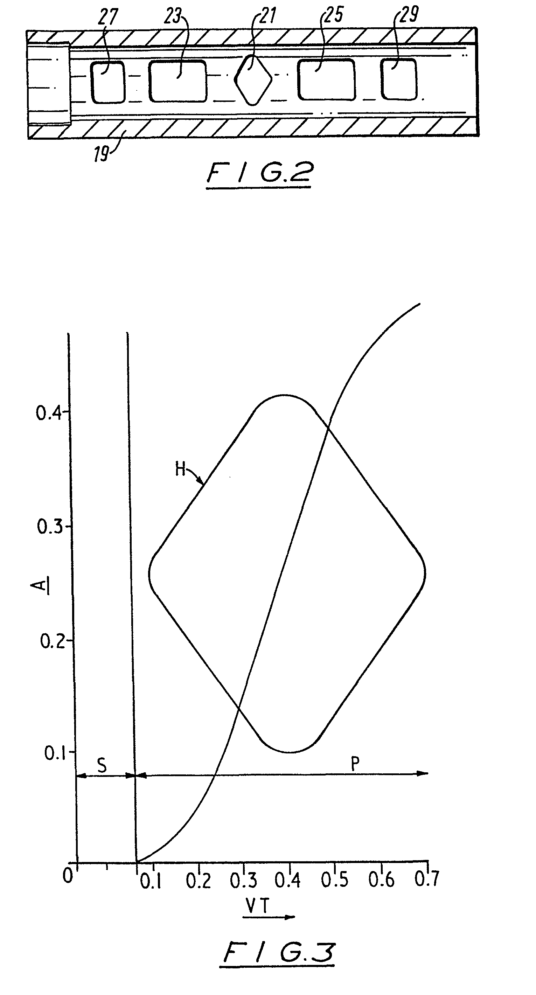

Referring to Figures 1 and 2, a main control valve 1 has a housing 3 in which is formed an inlet passage 5, two motor outlet passages 7,9 and two exhaust passages 11,13 which emerge into a common outlet 15. A bore 17 formed in the housing accommodates a control sleeve 19 which has an inlet port 21, two motor outlet ports 23,25 and two exhaust ports 27,29 which connect a common interior bore 31 with the respective passages in the valve housing. Seals 33 are provided between the control sleeve and the bore 17 to isolate the respective passages from one another.

A control spool 35 is slidable axially within the bore 31 and is honed and lapped to form a metal to metal seal by virtue of the very close fit of both these components. A working clearance of 0.0002 inches is provided. Both components are hardened and subsequently quick frozen to a temperature of minus 80°C to provide a dimensionally stable structure. Operating temperatures under full load may be as low as minus 15°C. The metal to metal contact eliminates all static friction and has the added advantage of being able to operate with dirty and moist airlines. Grooves 37' provide a wiping action so removing any particles.

By putting the sealing rings/packings on the outside of the sleeve (into a static position) allows the delicately machined spool and sleeve to "float", hence any damage or knocks to the main external casting will not be transmitted to the working surfaces.

4.

The mating surfaces of the control spool 37,39,41 and the interconnecting annular chambers 43,45 control the opening and closing, and inter-connection of the inlet ports, supply ports and exhaust.

Figure 2 shows a preferred embodiment of the control sleeve in which two inlet ports 21 of a diamond shape are provided diametrically opposite one another and in the same plane. The motor inlet/outlet ports 23 and 25 each comprise three rectangular ports, equispaced around the control sleeve. Similarly the exhaust ports 27,29 each comprise three approximately rectangular ports. The sleeve is preferably formed as an investment casting, but may be machined.

The spool 35 is biased into a central position under the influence of a spring 45 and in this position the inlet port 21 which connects with a compressed air supply line (not illustrated) is isolated from both of the adjacent motor supply passages by the surface 39 of the spool 35. Each of the motor supply ports (passages 23,25) leads to a pneumatic motor and depending upon which of the lines is pressurised in response to spool movement the motor is either rotated in a clockwise or anti-clockwise direction. For example, port 23 when pressurised may cause the motor to rotate in a clockwise direction.

In the rest position, a reduced diameter portion 47 of the spool disposed adjacent to each land 37,41 connects each of the motor ports 23,25 to exhaust.

The valve spool may be operated directly by a lever or as in the illustrated embodiment, may be remotely controlled whereby pressure is introduced into one or other of the end chambers 49,51 by way of connections 53,55.

Thus, upon pressurising the chamber 51 the spool will move to the left causing the motor port 23 to be connected to exhaust and the motor port 25 to be connected to the supply line connection since the land 39 will have moved to uncover the port 21.

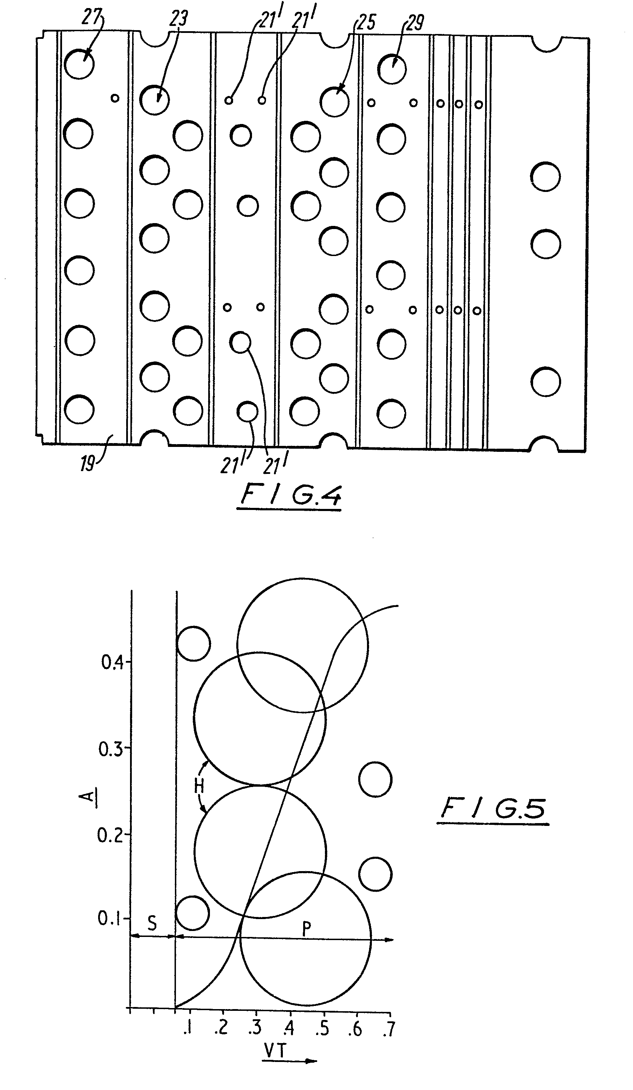

Since the port is of diamond shape initial movement will open only a small area of the port, thus the air transmitted to the motor will give rise to only a small increase in speed. If the valve spool is moved further then the speed will increase according to the response curve of Figure 3 roughly on a straight line relationship. Figure 3 shows the area of port A which is open for a particular valve travel $V_t$, for the diamond shape port i.e. the shape of hole H gives the illustrated control curve. The effect of the sealing land is shown by the distance S whilst the distance P shows the spool opening.

Figure 4 shows an alternative embodiment of the invention in which the control sleeve has inlet ports 21 formed by a plurality of holes 21' of different sizes and offset with their centres in different planes. Figure 4 shows a development of the control sleeve. Thus, only a small area is open upon initial movement of the valve spool.

Figure 5 shows the response curve for the alternative embodiment of sleeve illustrated in Figure 4 from which it will be seen that it corresponds almost exactly with that of the preferred embodiment. Figure 5 shows the area A of the ports 21' which is open for a particular valve travel $V_t$. The distance S represents the effect of the sealing land, whilst the distance P represents the spool opening. The hole pattern H to give the indicated response curve is shown - with four large and four small holes.

Because of the inherent controllability possible, especially at slow speeds, it is possible to make the valve unit suitable for operation and control from

6.

computer and instrument control systems. In this instance the spool would be biased in one direction and a standing datum pressure opposing the spring would be applied to the appropriate end chamber and a variable control pressure applied to the others.

The illustrated main control valve is a four way valve which provides dual directional control of motors. For motors only requiring control in one direction a three way valve would be sufficient. Thus for example the exhaust port 27 and motor outlet port 23 could be omitted i.e. only half of the illustrated valve is necessary.

7.

## CLAIMS

1.    A control valve in which communication between an inlet supply connection and a motor supply line connection for controlling the speed of a pneumatic motor is dependent upon the position of a valve spool in a control sleeve characterised in that the area of the inlet supply connection (21) uncovered by the spool (35) is arranged such that initially only a small increase in speed is produced for a relatively long travel whilst subsequent movement of the spool produces a greater change in speed.

2.    A control valve as claimed in claim 1 characterised in that the control spool (35) is slidably received in the control sleeve (19) and forms a metal-to-metal seal therewith, and the control sleeve has inlet ports (21) forming the inlet supply connection uncovered by the control spool (35).

3.    A control valve as claimed in claim 1 or 2 characterised in that the inlet supply connection is formed by a plurality of holes (24) in the control sleeve.

4.    A control valve as claimed in claim 3 characterised in that some of the plurality of holes are offset relative to other of the plurality of holes so that the plurality of holes are progressively uncovered upon opening movement of the control spool.

5.    A control valve as claimed in claim 3 or 4 characterised in that some of the plurality of holes are smaller in size than other of the plurality of holes.

6.    A control valve as claimed in claims 3, 4 or 5 characterised in that the holes are circular.

7.    A control valve as claimed in claim 3 characterised in that the plurality of holes comprise two or more diamond shaped holes.

8.

8.   A control valve as claimed in any preceding claim characterised in that the control valve is a three way valve having an inlet supply connection, an exhaust port and a motor outlet port.

9.   A control valve as claimed in any of claims 1 to 7 characterised in that the control valve is a four way valve having an inlet supply connection (21), two exhaust ports (27,29) and two motor outlet ports (23,25).

10.   A control valve as claimed in any preceding claim characterised in that the control spool is pilot controlled.

*F I G.1*

0076664

*F I G.2*

*F I G.3*

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 K 27/04 |
| X | DE-A-2 833 358 (SCHWERDT) | 1,2,3, 4,5,6, 9 | F 16 K 11/06 |
| | *Claim 1; figures* | | |
| | --- | | |
| X | GB-A- 721 904 (JONES & SHIPMAN LIMITED) | 1,2,3, 4,5,6, 9 | |
| | *Page 2, lines 11 till 82; figures* | | |
| | --- | | |
| X | FR-A-1 007 454 (JONES & SHIPMAN LIMITED) *Page 2, right-hand column, last paragraph till page 3, right-hand column, paragraph 2; figures* | 1,2,5, 9 | |
| | --- | | TECHNICAL FIELDS SEARCHED (Int. Cl. ³) |
| A | DE-A-2 223 980 (BOSCH) | | |
| | --- | | F 16 K |
| A | DE-A-1 500 239 (SPERRY RAND) | | F 15 B |
| | --- | | |
| A | GB-A- 10 838 (SHIELDS)(1911) | | |
| | ----- | | |

The present search report has been drawn up for all claims

| Place of search | Date of completion of the search | Examiner |
|---|---|---|
| THE HAGUE | 23-12-1982 | VAN REETH A.L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82